# EUROPÄISCHE PATENTSCHRIFT

(11) **EP 2 552 603 B1**
(45) Veröffentlichungstag und Bekanntmachung des Hinweises auf die Patenterteilung: **21.12.2016**
(21) Anmeldenummer: 11712511.2
(22) Anmeldetag: 28.03.2011
(51) Int. Cl.: C09J 7/02, B05D 7/00, B05D 3/02, B05D 1/28, B32B 38/14

(54) **HERSTELLUNGSVERFAHREN FÜR SUBSTRATE MIT MEHRFARBIGER LACKIERUNG**
MANUFACTURING PROCESS FOR MULTIPLE-COLOUR PAINT FILMS
PROCÉDÉ DE FABRICATION D'UN SUBSTRAT AVEC UN REVÊTEMENT MULTICOLORE

(30) Priorität: 01.04.2010 DE 102010014381
(43) Veröffentlichungstag der Anmeldung: 06.02.2013
(73) Patentinhaber: Karl Wörwag Lack- Und Farbenfabrik GmbH & Co. Kg, 70435 Stuttgart (DE)
(72) Erfinder: WARTA, Helge, 71245 Ditzingen (DE); FÄRBER, Peter, 71116 Gärtringen (DE)
(74) Vertreter: Patentanwaltskanzlei Cartagena
(86) Internationale Anmeldenummer: PCT/EP2011/054763
(87) Internationale Veröffentlichungsnummer: WO 2011/120940

(56) Entgegenhaltungen:
- EP-A1- 0 993 876
- WO-A1-2005/085336
- DE-A1-102007 040 376
- US-A- 4 678 690
- US-A1- 2003 124 254

## Beschreibung

Die vorliegende Erfindung betrifft ein Verfahren zum Aufbringen einer mehrfarbigen Lackierung auf ein Substrat unter Verwendung mehrerer pigmentierter Lacke sowie lackierte Produkte, die sich mit einem solchen Verfahren herstellen lassen.

Das Aufbringen mehrfarbiger Lackierungen auf Substrate hat in den letzten Jahren enorm an Bedeutung gewonnen. So werden z.B. im Automobilbereich von Kunden immer häufiger Produkte nachgefragt, die sich durch farbige Zierstreifen oder gegenüber einer Basisfarbe andersfarbig abgehobene Partien auszeichnen. Die Realisierung solcher mehrfarbiger Lackierungen ist jedoch in der Regel mit sehr hohem Aufwand und damit auch mit großen Kosten verbunden. Der übliche Ablauf von Serienlackierungen lässt sich nämlich bei der Durchführung von Mehrfachlackierungen unter Verwendung verschiedener Farben nicht einhalten. Bei üblichen Uni-Serienlackierungen, beispielsweise bei der Uni-Serienlackierung von Kraftfahrzeugkarosserien oder Karrossierieteilen, wird in der Regel ein farbgebender Basislack auf das jeweilige Substrat aufgetragen und danach ein Klarlack. Dies erfolgt in der Regel in einem prozessgesteuerten, getakteten Durchlauf, wobei die einzelnen Prozeßschritte hochautomatisiert sind und sich durch einen sehr hohen Output auszeichnen.

Zur Realisierung von mehrfarbigen Lackierungen muss der prozessgesteuerte Durchlauf dagegen nach dem Auftrag des farbgebenden Basislacks unterbrochen werden. Das Substrat wird aus dem Prozess ausgeschleust, um dann eine oder mehrere weitere Farblacke auf den zuerst aufgetragenen Basislack zu applizieren. Zuvor muss das Substrat mit dem Basislack natürlich getrocknet und zusätzlich in einem weiteren Schritt maskiert werden. Nach erfolgtem Auftrag des oder der weiteren Farblacke wird die Maskierung wieder entfernt. Dann können die Substrate wieder in die oben beschriebene Prozesskette eingeschleust werden. Es folgt dann in der Regel der abschließende Auftrag des erwähnten Klarlacks.

Die beschriebene Vorgehensweise ist nicht nur umständlich und zeitaufwendig, sie bringt auch weitere Nachteile mit sich. Klassische Serienlackierprozesse erfolgen nämlich in staubfreien, abgekapselten Lackierumgebungen. Durch das erwähnte Aus- und Wiedereinschleusen der Substrate wird jedoch häufig Staub und Schmutz in die abgekapselten Lackierumgebungen eingetragen, was z.B. Fehlstellen bei der abschließenden Lackierung mit dem Klarlack zur Folge haben kann. Die Behebung solcher Fehler ist mit weiterem Aufwand und somit auch mit weiteren Kosten verbunden.

Die US 4,678,690 beschreibt Aufkleber für Verzierungen im Automobilbereich. Die Aufkleber haben eine Schutzfolie auf der Frontseite, die sich farblich von dem betreffenden Aufklebermotiv unterscheidet und ohne Beschädigung des Aufklebers von demselben abgelöst werden kann.

Aus der EP 0 993 876 A1 ist ein Verfahren zum Aufbringen eines Farbdekors auf verschiedenartige Substrate unter Verwendung eines flächigen Trägers mit Release-Eigenschaften bekannt. Dabei kann ein teilweise gehärteter Lack, gefolgt von einem Farbdekor, bestehend aus diffundierbaren Dispersionfarbstoffen, auf einen Träger mit Release-Eigenschaften aufgebracht werden. Als Haftvermittler zwischen dem zu dekorierenden Substrat und dem Dekor dient ein Kleber.

Der vorliegenden Erfindung lag die Aufgabe zugrunde, eine alternative technische Lösung zum Aufbringen einer mehrfarbigen Lackierung auf ein Substrat bereitzustellen, bei der die oben genannten Probleme nicht oder nur in verringertem Ausmaß auftreten.

Diese Aufgabe wird gelöst durch das Verfahren mit den Merkmalen des Anspruchs 1. Bevorzugte Ausführungsformen des erfindungsgemäßen Verfahrens sind in den Ansprüchen 2 bis 12 angegeben..

Das erfindungsgemäße Verfahren dient wie die oben erwähnten herkömmlichen Verfahren zum Aufbringen einer mehrfarbigen Lackierung auf ein Substrat. Als Substrate kommen insbesondere Karosserien bzw. Karosserieteile von Kraftfahrzeugen in Frage. Grundsätzlich lassen sich jedoch auch beliebige andere Substrate wie z.B. Möbel oder elektronische Geräte mittels des erfindungsgemäßen Verfahrens mit einer mehrfarbigen Lackierung versehen.

Ein erfindungsgemäßes Verfahren umfasst stets die folgenden Schritte:
(1) Aufbringen eines ersten pigmentierten Lacks auf das Substrat: In diesem Schritt wird das Substrat mit einer Basisfarbe versehen, auf die anschließend noch eine oder mehrere weitere Farben aufgetragen werden können. Als pigmentierter Basislack wird meist ein Hydrobasislack verwendet, also ein Lack mit Wasser als Lösemittelbasis. Grundsätzlich kann es sich bei dem ersten pigmentierten Lack jedoch auch um einen alternativen lösemittelhaltigen Lack oder um einen Pulverlack handeln.
(2) Trocknen und/oder Aushärten des ersten pigmentierten Lacks bei einer Trocknungs- und/oder Aushärtungstemperatur: Sofern der verwendete erste pigmentierte Lack ein Lösungsmittel enthält, so muss dieses nach dem Aufbringen des ersten pigmentierten Lacks entfernt werden. Hierzu wird der erste pigmentierte Lack in der Regel einer erhöhten Temperatur (der erwähnten Trocknungstemperatur) ausgesetzt. Gegebenenfalls wird der erste pigmentierte Lack auch auf eine definierte Temperatur (die erwähnte Aushärtungstemperatur) gebracht, insbesondere erwärmt, um ihn mindestens teilweise, sofern erforderlich, auszuhärten. Dies spielt insbesondere dann eine Rolle, wenn der erste pigmentierte Lack thermisch vernetzbare Komponenten enthält. Daneben kann der Trocknungs- und/oder Aushärtungsschritt natürlich auch die Härtung mittels aktinischer Strahlung, insbesondere mit UV-Strahlung, zusätzlich oder an Stelle der thermischen Härtung, umfassen. Dies spielt insbesondere dann eine Rolle, wenn der erste pigmentierte Lack durch Strahlung vernetzbare Komponenten enthält. In bevorzugten Ausführungsformen entspricht die Trocknungstemperatur der Aushärtungstemperatur. Trocknung und Aushärtung können gegebenenfalls gleichzeitig erfolgen.
(3) Aufbringen eines zweiten pigmentierten Lacks auf das Substrat, insbesondere unter teilweiser Überlackierung des ersten pigmentierten Lacks: Der zweite pigmentierte Lack weicht vom ersten pigmentierten Lack farblich ab, er dient z.B. der Bereitstellung der eingangs erwähnten Zierstreifen und/oder andersfarbig abgehobenen Partien. Der erste pigmentierte Lack, der das Substrat in der Regel großflächig überdeckt, wird bevorzugt mit dem zweiten pigmentierten Lack teilweise überlackiert.

Besonders zeichnet sich ein erfindungsgemäßes Verfahren dadurch aus, dass zum Aufbringen des zweiten pigmentierten Lacks an Stelle eines herkömmlichen Lacks ein Schichtverbund verwendet wird, der einen Träger umfasst, auf dem eine Schicht des zweiten pigmentierten Lacks angeordnet ist, wobei diese Schicht bereits ausgehärtet ist, also keine durch Strahlung und/oder Wärme vernetzbare Komponenten und auch kein Lösungsmittel mehr enthält. Ein Schichtverbund mit einer solchen bereits ausgehärteten Lackschicht ist relativ unempfindlich gegenüber Hitze, eine unerwünschte Blasenbildung spielt bei seiner Applikation in der Regel keine Rolle.

Derartige Schichtverbünde und Lackschichten sind beispielsweise in der von der Anmelderin eingereichten Internationalen Patentanmeldung mit dem Aktenzeichen PCT/EP2008/006765 (veröffentlicht als WO 2009/024310 A2) beschrieben. Sie zeichnen sich insbesondere dadurch aus, dass sich der erwähnte Träger von der darauf befindlichen Lackschicht ablösen lässt, selbst wenn diese bereits thermisch und UVgehärtet ist. Der Träger dient also gegebenenfalls nur als "Transfermedium", mittels dem ein Lack auf ein Substrat transferiert werden kann. Dies wird auch vorliegend so gehandhabt. Bevorzugt wird der Schichtverbund zum Aufbringen des zweiten pigmentierten Lacks mit der Seite, auf der die Schicht des zweiten pigmentierten Lacks angeordnet ist, auf das Substrat aufgedrückt. Der Träger wird anschließend abgezogen, auf dem Substrat verbleibt dann die pigmentierte zweite Lackschicht.

Besonders bevorzugt erfolgt das Aufbringen des zweiten pigmentierten Lacks bei einer Temperatur, die der oben genannten Trocknungs- und/oder Aushärtungstemperatur entspricht oder sogar darüber liegt. Wie erwähnt, erfolgt das Trocknen und/oder Aushärten des ersten pigmentierten Lacks in Schritt (2) in der Regel bei erhöhten Temperaturen. In herkömmlichen Verfahren schließt sich an eine solche Trocknung und/oder Aushärtung in der Regel ein Abkühlschritt an, da sich insbesondere Flüssiglacke auf erhitzte Substrate nicht blasenfrei aufbringen lassen. Ein solcher Abkühlschritt ist im Rahmen des vorliegenden Verfahrens nicht zwingend erforderlich, vielmehr kann das zu lackierende Substrat direkt mit dem zweiten pigmentierten Lack beschichtet werden, während es noch die Trocknungs- und/oder Aushärtungstemperatur aufweist.

In bevorzugten Ausführungsformen wird das Substrat nach dem Aufbringen des zweiten pigmentierten Lacks bei einer Tempertemperatur getempert, insbesondere bei einer Temperatur zwischen 40 °C und 180 °C, besonders bevorzugt zwischen 80 °C und 160 °C. Ein solcher Temperschritt kann sich unmittelbar an das Aufbringen des zweiten pigmentierten Lacks auf das noch heiße, die Trocknungs- und/oder Aushärtungstemperatur aufweisende Substrat anschließen. Alternativ kann der zweite pigmentierte Lach natürlich aber auch bei einer Temperatur unterhalb der Trocknungs- und/oder Aushärtungstemperatur aufgebracht werden. In diesem Fall kann die Temperbehandlung erforderlich sein, um eine ausreichende Haftung der Schicht aus dem zweiten pigmentierten Lack auf der Schicht aus dem ersten pigmentierten Lack zu gewährleisten.

In bevorzugten Ausführungsformen kann der im erfindungsgemäßen Verfahren zum Einsatz kommende Schichtverbund eine haftvermittelnde Schicht umfassen, die insbesondere auf der zweiten pigmentierten Lackschicht angeordnet ist. Die zweite pigmentierte Lackschicht ist somit in bevorzugten Ausführungsformen zwischen der haftvermittelnden Schicht und dem Träger angeordnet. Beim Aufbringen wird der Schichtverbund dann mit der haftvermittelnden Schicht voran auf das Substrat gedrückt.

Die haftvermittelnde Schicht wird bevorzugt derart gewählt, dass sie bei einer Temperatur, die der erwähnten Trocknungs- und/oder Aushärtungstemperatur oder der Tempertemperatur entspricht oder sogar darüber liegt, aktiviert wird. Bei Raumtemperatur ist die Schicht dagegen vorzugsweise trocken und nicht klebrig. In bevorzugten Ausführungsformen kann sie eine dauerhafte feste Verbindung mit dem getrockneten und/oder ausgehärteten ersten pigmentierten Lack nur dann eingehen, wenn sie mindestens auf die Trocknungs- und/oder Aushärtungstemperatur oder die Tempertemperatur erwärmt wird, beispielsweise also beim Inkontaktbringen mit einem noch nicht abgekühlten Substrat aus Schritt (2) oder bei dem beschriebenen Tempervorgang.

Diese haftvermittelnde Schicht ist bevorzugt im verwendeten Schichtverbund wie die pigmentierte Lackschicht bereits ausgehärtet. Sie enthält entsprechend vorzugsweise keine thermisch oder durch aktinische Strahlung vernetzbaren Gruppen mehr. Ihre haftvermittelnden Eigenschaften sind bevorzugt ausschließlich durch Erwärmung aktivierbar.

Die Vorteile der erfindungsgemäßen Vorgehensweise sind offensichtlich. Die Verwendung des beschriebenen Schichtverbundes, insbesondere mit der auf die Trocknungs- und/ oder Aushärtungstemperatur gemäß Schritt (2) abgestimmten haftvermittelnden Schicht, ermöglicht das Aufbringen des zweiten pigmentierten Lacks auf den ersten pigmentierten Lack ohne Zwischenschritte wie den erwähnten Abkühlschritt oder die eingangs erwähnte Maskierung des Substrats bzw. die anschließende Entfernung einer entsprechenden Maskierung. Letzteres wird dadurch ermöglicht, dass sich der verwendete Schichtverbund durch entsprechenden Zuschnitt bereits vor dem Aufbringen auf das Substrat in die jeweils gewünschte Form gebracht werden kann. Auch komplexe Farbmuster und -geometrien lassen sich so ohne Weiteres auf das Substrat aufbringen.

In bevorzugten Ausführungsformen kann in einem erfindungsgemäßen Verfahren auch ein Schichtverbund verwendet werden, der eine Schicht aus einem zweiten pigmentierten Lacks umfasst, die selbst haftvermittelnde Eigenschaften aufweist, also eine feste Bindung zu dem ersten pigmentierten Lack eingehen kann, ohne dass es dazu einer separaten haftvermittelnden Schicht bedarf. Bevorzugt sind auch die Hafteigenschaften dieser Schicht bei einer Temperatur aktivierbar, die der erwähnten Trocknungs- und/oder Aushärtungstemperatur entspricht oder darüber liegt (ggf. muss das sich auf die Trocknungs- und/oder Aushärtungstemperatur erwärmte Substrat und/oder der verwendete Schichtverbund noch zusätzlich erwärmt werden). Bei Raumtemperatur ist die Schicht dagegen bevorzugt trocken und nicht klebrig.

In besonders bevorzugten Ausführungsformen des erfindungsgemäßen Verfahrens wird nach Schritt (2) nicht nur ein zweiter pigmentierter Lack auf das Substrat aufgebracht. Selbstverständlich ist es auch möglich, das Substrat noch mit einem oder mehreren weiteren pigmentierten Lacken überzulackieren. Dies kann sequentiell oder aber auch gleichzeitig beim Aufbringen des zweiten pigmentierten Lacks erfolgen. Vorzugsweise wird zum Aufbringen des oder der weiteren pigmentierten Lacke mindestens ein weiterer Schichtverbund verwendet, wie er oben beschrieben wurde, also ein Schichtverbund mit einem Träger, einer darauf befindlichen pigmentierten und bereits ausgehärteten Lackschicht sowie gegebenenfalls mit einer zusätzlichen haftvermittelnden Schicht.

Die oben genannte Trocknungs- und/oder Aushärtungstemperatur liegt vorzugsweise im Bereich zwischen 40 °C und 180 °C, insbesondere zwischen 80 °C und 110 °C. Eine Temperatur innerhalb dieses Temperaturbereichs ist in der Regel ausreichend, um gegebenenfalls im ersten pigmentierten Lack enthaltenes Lösungsmittel zu entfernen sowie um den ersten pigmentierten Lack gegebenenfalls auszuhärten.

Haftvermittelnde Schichten, die durch Erwärmen auf eine solche Trocknungs- und/oder Aushärtungstemperatur aktivierbar sind, sind dem Fachmann grundsätzlich bekannt. Im Rahmen des erfindungsgemäßen Verfahrens wird als haftvermittelnde Schicht besonders bevorzugt eine Klebstoffschicht auf Basis von Polyurethanen, insbesondere auf Basis einer Polyurethandispersion, verwendet. Dies gilt insbesondere dann, wenn auch der erste pigmentierte Lack auf einem Polyurethan, insbesondere auf einer Polyurethandispersion, basiert oder zumindest anteilsmäßig aus einer solchen hergestellt wurde.

Als pigmentierten zweiten Lack weisen die in einem erfindungsgemäßen Verfahren verwendeten Schichtverbünde bevorzugt ebenfalls eine Lackschicht auf Basis von Polyurethan aus. Besonders bevorzugt kommt auch hier ein Lack aus einer Polyurethandispersion zum Einsatz. Geeignet sind beispielsweise polyesterbasierende Polyurethandispersionen. Dies gilt ebenfalls insbesondere dann, wenn auch der erste pigmentierte Lack auf einem Polyurethan, insbesondere auf einer Polyurethandispersion, basiert oder zumindest anteilsmäßig aus einer solchen hergestellt wurde.

Weiterhin grundsätzlich geeignet sind auch die in der PCT/EP2008/ 006765 beschriebenen Lackschichten aus einem Lack umfassend eine doppelbindungshaltige, OH-funktionelle Komponente A und eine doppelbindungshaltige, NCO-funktionelle Komponente B, wobei Komponente A bevorzugt einen Festkörperanteil zwischen 30 Gew.-% und 100 Gew.-%, eine Doppelbindungsdichte zwischen 2 val/kg und 5 val/kg (bei einem Festkörperanteil von 100 %) und einen OH-Gehalt zwischen 4 Gew.-% und 7 Gew.-% aufweist. Komponente B ist in der Regel gekennzeichnet durch einen Festkörperanteil zwischen 30 Gew.-% und 100 Gew.-%, eine Doppelbindungsdichte zwischen 1 val/kg und 4 val/kg (bei einem Festkörperanteil von 100 %) und einen NCO-Gehalt zwischen 4 Gew.-% und 7 Gew.-%. Wie oben erwähnt, wird betreffend bevorzugte Merkmale und Eigenschaften eines solchen Lacks auf den Inhalt der Internationalen Patentanmeldung mit dem Aktenzeichen PCT/EP2008/006765 verwiesen.

Auch betreffend geeignete Träger kann auf die PCT/EP2008/006765 verwiesen werden. Bevorzugt handelt es sich bei dem Träger um eine Folie, insbesondere um eine einschichtige Folie oder eine mehrschichtige Verbundfolie. Geeignet sind grundsätzlich alle Folien mit Release-Eigenschaften, insbesondere mit Release-Eigenschaften gegen polyuretanbasierte Klebstoffe und Lacke.

Bevorzugt besteht der Träger im wesentlichen aus Kunststoff, insbesondere aus Fluorpolymeren wie Ethylen-Tetrafluorethylen (ETFE), Polyethylenterephthalat, Polyolefin, Polycarbonat, Acrylnitril-Butadien-Styrol (ABS), Acryl-Styrol-Acrylnitril (ASA), Acrylnitril-Butadien-Styrol/Polycarbonat (ABS/PC), Acryl-Styrol-Acrylnitril/ Polycarbonat (ASA/PC), Polyacrylat, Polystyrol, Polycarbonat/Polybutylenterephthalat (PC/PBT) und/ oder Polymethylmethacrylat.

Besonders bevorzugt weist ein in einem erfindungsgemäßen Verfahren eingesetzter Schichtverbund einen Träger aus einer biaxial gereckten Polypropylenfolie oder aus einer biaxial gereckten Polyethylenterephthalatfolie auf.

Bei dem ersten pigmentierten Lack handelt es sich vorzugsweise um einen polyurethanbasierten Lack, insbesondere um einen Flüssiglack. Der erste pigmentierte Lack und der zweite pigmentierte Lack und/oder gegebenenfalls die haftvermittelnde Schicht sind in bevorzugten Ausführungsformen chemisch aufeinander abgestimmt, so dass eine optimale Anhaftung des zweiten pigmentierten Lacks auf dem ersten pigmentierten Lack gewährleistet ist.

Vor dem Aufbringen des ersten pigmentierten Lacks kann auf das Substrat gegebenenfalls eine Korrosionsschutz-Grundierung aufgebracht werden. Derartige Korrosionsschutz-Grundierungen sind dem Fachmann bekannt und müssen im Rahmen der vorliegenden Erfindung nicht weiter erläutert werden.

Gleiches gilt grundsätzlich auch für den Klarlack, der auf das Substrat nach Schritt (3) aufgebracht wird. Bei einem solchen Klarlack handelt es sich in der Regel um einen Flüssiglack.

In einigen besonders bevorzugten Ausführungsformen des erfindungsgemäßen Verfahrens wird der Schichtverbund vor seiner Verwendung zur Überlackierung des ersten pigmentierten Lacks tiefgezogen. Dies kann insbesondere dann bevorzugt sein, wenn das zu beschichtende Substrat eine nicht planare Oberfläche aufweist, auf die der zweite pigmentierte Lack und/oder einer der weiteren pigmentierten Lacke aufgebracht werden soll. Das Tiefziehen von Schichtverbünden, wie sie in der PCT/EP2008/006765 beschrieben und im Rahmen des vorliegenden Verfahrens verwendet werden, ist grundsätzlich problemlos möglich, sofern als Träger tiefziehfähige Folien verwendet werden. Betreffend mögliche Folienmaterialien wird auf die obigen Ausführungen Bezug genommen.

Der Tiefziehvorgang des Schichtverbundes kann gegebenenfalls vor der Enthärtung des auf dem Träger befindlichen pigmentierten Lacks erfolgen. Da der Schichtverbund beim Tiefziehen in der Regel erwärmt wird, kann der Lack gegebenenfalls beim Tiefziehvorgang thermisch aushärten. Nach dem Tiefziehen (aber vor der Applikation des Schichtverbundes im Rahmen eines erfindungsgemäßen Verfahrens) kann dann die Enthärtung des Lackes, z.B. mittels aktinischer Strahlung, erfolgen.

Mit einer mehrfarbigen Lackierung versehene Substrate, die sich nach einem erfindungsgemäßen Verfahren herstellen lassen oder die nach einem solchen Verfahren hergestellt wurden, sind ebenfalls Gegenstand der vorliegenden Erfindung. Wie oben erwähnt, kann es sich bei solchen Substraten im Grunde genommen um alle möglichen denkbaren Industrieprodukte handeln. Bevorzugt handelt es sich um Automobilkarosserien oder Teile derselben.

Weitere Merkmale der Erfindung ergeben sich aus dem Beispiel in Verbindung mit den Unteransprüchen. Es sei an dieser Stelle explizit betont, dass sämtliche in der vorliegenden Anmeldung beschriebenen fakultativen Aspekte des erfindungsgemäßen Verfahrens oder des erfindungsgemäßen Substrats jeweils für sich allein oder in Kombination mit einem oder mehreren der weiteren beschriebenen fakultativen Aspekte bei einer Ausführungsform der Erfindung verwirklicht sein können. Die nachfolgende Beschreibung von bevorzugten Ausführungsformen dient lediglich zur Erläuterung und zum besseren Verständnis der Erfindung und ist in keiner Weise einschränkend zu verstehen.

### Beispiel

Zur Herstellung eines in einem erfindungsgemäßen Verfahren einsetzbaren Schichtverbundes wurden 250 Gewichtsteile Füllstoffpaste mit 20 Gewichtsteilen Butylglycol, 50 Gewichtsteilen demineralisiertem Wasser, 305 Gewichtsteilen Polyurethandispersion und 20 Gewichtsteilen Polyesterpolyol-Emulsion gemischt. Die dabei entstehende Mischung wurde fünf Minuten gerührt, danach erfolgte die Zugabe von 320 Gewichtsteilen Pigmentpaste, 25 Gewichtsteilen Polyesterpolyol-Emulsion und zur Viskositätseinstellung weiteren 10 Gewichtsteilen demineralisiertem Wasser. Die entstehende Lackmischung ließ man 16 Stunden reifen, danach wurde ihr pH-Wert mit Dimethylethylamin (DMEA) auf einen Wert zwischen 8 und 9 eingestellt.

Nach Bereitstellung einer biaxial gereckten Polyethylenterephthalatfolie wurde die hergestellte Lackmischung auf eine Seite dieser Folie aufgerakelt und anschließend bei erhöhten Temperaturen ausgehärtet.

Mit einem so hergestellten Schichtverbund ließ sich problemlos ein mit einem ersten pigmentierten Lack beschichtetes Substrat überlackieren. Das Substrat wurde dazu nach dem Auftrag des ersten pigmentierten Lacks bei einer Temperatur von ca. 110 °C getrocknet. Unmittelbar nach dem Trocknen erfolgte das Aufbringen des hergestellten Schichtverbundes mit der Lackseite voran auf die noch heiße Schicht aus dem ersten Lack. Die Polyethylenterephthalatfolie ließ sich nach dem Aufbringen problemlos abziehen.

Ebenso problemlos ließ sich die Folie abziehen, wenn der Schichtverbund auf einen bei zwischen 60 °C und 70 °C getrockneten und dann auf Raumtemperatur abgekühlten Lack aufgebracht und anschließend über einen kurzen Zeitraum bei 120 °C bis 140 °C getempert wurde.

## Patentansprüche

1. Lackierverfahren zum Aufbringen einer mehrfarbigen Lackierung auf ein Substrat, insbesondere auf ein Karosserieteil eines Kraftfahrzeugs, umfassend die Schritte
(1) Aufbringen eines ersten pigmentierten Lacks auf das Substrat,
(2) Trocknen und/oder Aushärten des ersten pigmentierten Lacks bei einer Trocknungs- und/oder Aushärtungstemperatur,
(3) Aufbringen eines zweiten pigmentierten Lacks auf das Substrat unter teilweiser Überlackierung des ersten pigmentierten Lacks, und
(4) Anschließendes Aufbringen eines Klarlacks auf das Substrat,
wobei zum Aufbringen des zweiten pigmentierten Lacks ein Schichtverbund verwendet wird, der einen Träger umfasst, auf dem eine Schicht des zweiten pigmentierten Lacks angeordnet ist, wobei diese Schicht bereits ausgehärtet ist.

2. Verfahren nach Anspruch 1, **dadurch gekennzeichnet, dass** das Aufbringen des zweiten pigmentierten Lacks bei einer Temperatur erfolgt, die mindestens der Trocknungs- und/ oder Aushärtungstemperatur entspricht.

3. Verfahren nach Anspruch 1 oder Anspruch 2, **dadurch gekennzeichnet, dass** das Substrat nach dem Aufbringen des zweiten pigmentierten Lacks bei einer Tempertemperatur getempert wird, insbesondere bei einer Temperatur zwischen 40 °C und 180 °C, besonders bevorzugt zwischen 80 °C und 160 °C

4. Verfahren nach einem der vorhergehenden Ansprüche, **dadurch gekennzeichnet, dass** der Schichtverbund eine haftvermittelnde Schicht umfasst.

5. Verfahren nach Anspruch 4, **dadurch gekennzeichnet, dass** die haftvermittelnde Schicht bei der Trocknungs- und/oder Aushärtungstemperatur oder der Tempertemperatur aktiviert wird.

6. Verfahren nach einem der vorhergehenden Ansprüche, **dadurch gekennzeichnet, dass** nach Schritt (2) neben dem zweiten pigmentierten Lack mindestens ein weiterer pigmentierter Lack auf das Substrat aufgebracht wird, wobei dazu vorzugsweise mindestens ein weiterer Schichtverbund verwendet wird, der einen Träger umfasst, auf dem eine Schicht eines bereits ausgehärteten pigmentierten Lacks angeordnet ist.

7. Verfahren nach einem der vorhergehenden Ansprüche, **dadurch gekennzeichnet, dass** die Trocknungs- und/oder Aushärtungstemperatur im Bereich zwischen 40 °C und 180 °C, insbesondere zwischen 80 °C und 110 °C, liegt.

8. Verfahren nach einem der vorhergehenden Ansprüche, **dadurch gekennzeichnet, dass** als haftvermittelnde Schicht eine Klebstoffschicht auf Basis von Polyurethan verwendet wird.

9. Verfahren nach einem der vorhergehenden Ansprüche, **dadurch gekennzeichnet, dass** der Schichtverbund als zweite pigmentierte Lackschicht eine Lackschicht auf Basis von Polyurethan umfasst.

10. Verfahren nach einem der vorhergehenden Ansprüche, **dadurch gekennzeichnet, dass** die Klebstoffschicht und/oder die zweite pigmentierte Lackschicht in dem Schichtverbund thermisch und/oder mit UV-Strahlung ausgehärtet sind.

11. Verfahren nach einem der vorhergehenden Ansprüche, **dadurch gekennzeichnet, dass** auf das Substrat vor dem Schritt (1) eine Korrosionsschutz-Grundierung aufgebracht wird.

12. Verfahren nach einem der vorhergehenden Ansprüche, **dadurch gekennzeichnet, dass** der Schichtverbund vor seiner Verwendung tiefgezogen wird.

## Claims

1. Coating process for applying a multicoloured coating to a substrate, more particularly to a bodywork part of a motor vehicle, comprising the steps of
(1) applying a first pigmented coating material to the substrate,
(2) drying and/or curing the first pigmented coating material at a drying and/or curing temperature,
(3) applying a second pigmented coating material to the substrate, with partial recoating of the first pigmented coating material, and
(4) subsequently applying a clearcoat material to the substrate,
where the second pigmented coating material is applied using a laminate which comprises a carrier bearing a layer of the second pigmented coating material, this layer being already cured.

2. Process according to Claim 1, **characterized in that** the second pigmented coating material is applied at a temperature which corresponds at least to the drying and/or curing temperature.

3. Process according to Claim 1 or Claim 2, **characterized in that** after the second pigmented coating material has been applied, the substrate is heated at a heating temperature, more particularly at a temperature of between 40°C and 180°C, more preferably between 80°C and 160°C.

4. Process according to any of the preceding claims, **characterized in that** the laminate comprises an adhesion-promoting layer.

5. Process according to Claim 4, **characterized in that** the adhesion-promoting layer is activated at the drying and/or curing temperature or the heating temperature.

6. Process according to any of the preceding claims, **characterized in that** after step (2), in addition to the second pigmented coating material, at least one further pigmented coating material is applied to the substrate, preferably using at least one further laminate which comprises a carrier bearing a layer of an already cured pigmented coating material.

7. Process according to any of the preceding claims, **characterized in that** the drying and/or curing temperature is in the range between 40°C and 180°C, more particularly between 80°C and 110°C.

8. Process according to any of the preceding claims, **characterized in that** a layer of adhesive based on polyurethane is used as adhesion-promoting layer.

9. Process according to any of the preceding claims, **characterized in that** the laminate comprises, as second pigmented coating layer, a coating layer based on polyurethane.

10. Process according to any of the preceding claims, **characterized in that** the layer of adhesive and/or the second pigmented coating layer in the laminate are cured thermally and/or with UV radiation.

11. Process according to any of the preceding claims, **characterized in that** before step (1) an anti-corrosion primer is applied to the substrate.

12. Process according to any of the preceding claims, **characterized in that** the laminate is thermoformed before being used.

## Revendications

1. Procédé de vernissage pour l'application d'un vernis multicolore sur un substrat, notamment sur une partie de carrosserie d'un véhicule automobile, comprenant les étapes suivantes :
(1) l'application d'un premier vernis pigmenté sur le substrat,
(2) le séchage et/ou le durcissement du premier vernis pigmenté à une température de séchage et/ou de durcissement,
(3) l'application d'un deuxième vernis pigmenté sur le substrat avec sur-vernissage partiel du premier vernis pigmenté, puis
(4) l'application d'un vernis transparent sur le substrat,
un stratifié qui comprend un support sur lequel une couche du deuxième vernis pigmenté est agencée étant utilisé pour l'application du deuxième vernis pigmenté, cette couche étant déjà durcie.

2. Procédé selon la revendication 1, **caractérisé en ce que** l'application du deuxième vernis pigmenté a lieu à une température qui correspond au moins à la température de séchage et/ou de durcissement.

3. Procédé selon la revendication 1 ou la revendication 2, **caractérisé en ce que** le substrat est recuit après l'application du deuxième vernis pigmenté à une température de recuit, notamment à une température comprise entre 40 °C et 180 °C, de manière particulièrement préférée comprise entre 80 °C et 160 °C.

4. Procédé selon l'une quelconque des revendications précédentes, **caractérisé en ce que** le stratifié comprend une couche de promoteur d'adhésion.

5. Procédé selon la revendication 4, **caractérisé en ce que** la couche de promoteur d'adhésion est activée à la température de séchage et/ou de durcissement ou à la température de recuit.

6. Procédé selon l'une quelconque des revendications précédentes, **caractérisé en ce qu'**après l'étape (2), en plus du deuxième vernis pigmenté, au moins un autre vernis pigmenté est appliqué sur le substrat, au moins un autre stratifié étant de préférence utilisé pour cela, qui comprend un support sur lequel une couche d'un vernis pigmenté déjà durci est agencée.

7. Procédé selon l'une quelconque des revendications précédentes, **caractérisé en ce que** la température de séchage et/ou de durcissement se situe dans la plage comprise entre 40 °C et 180 °C, notamment entre 80 °C et 110 °C.

8. Procédé selon l'une quelconque des revendications précédentes, **caractérisé en ce qu'**une couche d'adhésif à base de polyuréthane est utilisée en tant que couche de promoteur d'adhésion.

9. Procédé selon l'une quelconque des revendications précédentes, **caractérisé en ce que** le stratifié comprend en tant que deuxième couche de vernis pigmentée une couche de vernis à base de polyuréthane.

10. Procédé selon l'une quelconque des revendications précédentes, **caractérisé en ce que** la couche d'adhésif et/ou la deuxième couche de vernis pigmentée dans le stratifié sont durcies thermiquement et/ou avec un rayonnement UV.

11. Procédé selon l'une quelconque des revendications précédentes, **caractérisé en ce qu'**une couche de base anticorrosion est appliquée sur le substrat avant l'étape (1).

12. Procédé selon l'une quelconque des revendications précédentes, **caractérisé en ce que** le stratifié est embouti avant son utilisation.
